# FASCICULE DE BREVET EUROPEEN

(11) **EP 2 114 762 B1**
(45) Date de publication et mention de la délivrance du brevet: **01.12.2010**
(21) Numéro de dépôt: 08762020.9
(22) Date de dépôt: 31.01.2008
(51) Int. Cl.: B63B 35/79, B64C 31/06

(54) **AILE DE TRACTION GONFLABLE EN DELTA**
AUFBLASBARER DELTA-TRAKTIONS-DRACHEN
INFLATABLE DELTA TRACTION KITE

(30) Priorité: 31.01.2007 FR 0752989; 11.06.2007 FR 0755664
(43) Date de publication de la demande: 11.11.2009
(73) Titulaire: F One SARL, 34970 Lattes (FR)
(72) Inventeur: SALLES, Raphaël, F-34110 Vic La Gardiole (FR); PERETTI, Sylvain, F-Caussols 06460 (FR)
(74) Mandataire: Rhein, Alain
(86) Numéro de dépôt international: PCT/FR2008/050160
(87) Numéro de publication internationale: WO 2008/104667

(56) Documents cités:
- DE-A1-102004 042 669
- DE-A1-102004 051 708
- DE-U1- 20 107 925
- FR-A- 2 873 093

## Description

La présente invention concerne la réalisation d'une aile de traction gonflable ainsi que son système de gestion de la puissance de traction, de la direction et des manoeuvres transitoires.

Cette invention a trait au domaine de la traction vélique de planches nautiques, et autres engins de plages, de bateau ainsi que des skieurs, surfeurs et engins terrestres adaptés.

Des ailes de traction gonflable adaptées au kite surf sont connues des documents DE 10 2004 042669 et DE 10 2004 051708.

Il est connu d'utiliser deux types d'ailes de traction gonflables :
- les ailes dites plates qui ont en général un rapport entre l'envergure à plat, à savoir la distance séparant les deux extrémités de l'aile, et l'envergure en vol, à savoir la largeur de l'aile en vol, qui est inférieur à environ 1,5. Leur contrôle s'effectue par un système de suspentes complexe disposé tout au long de l'envergure.
- les ailes dites dont le rapport entre l'envergure à plat et en vol est supérieur à environ 1,5, et qui sont du type dit "C-shape" ou " C-kite". Ces ailes présentent la forme caractéristique d'un dièdre négatif, à savoir une arche régulière et profonde. Elles présentent la particularité de pouvoir voler et être contrôlée par des lignes situées à ses extrémités.

Ces lignes sont généralement au nombre de quatre d'une longueur d'environ une vingtaine de mètres, les deux premières situées aux extrémités avant de l'aile sont définies comme porteuses les deux autres lignes sont situées à l'arrière des extrémités et servent à la gestion de la direction et de l'assiette.

Les porteuses sont reliées au pilote par un harnais et les lignes de direction sont accrochées de part et d'autre d'une barre coulissant sur la ligne réunissant les porteuses dans le dernier mètre au niveau du pilote.

Les porteuses reçoivent la part la plus importante de la charge aérodynamique, elles sont situées en général légèrement en avant de la résultante des forces aérodynamiques (RFA) afin de donner à l'aile un couple piqueur qui permet de transférer une part de ces forces aux lignes arrière qui de ce fait assurent le contrôle de l'assiette par le pilote.

Lorsque les lignes arrière sont actionnées de manière asymétrique elles induisent un gauchissement de l'aile qui en générant une traînée aérodynamique différentielle permet le contrôle en direction de l'aile.

Ce système de contrôle est généralement combiné à d'autres lignes situées sur le bord d'attaque et qui entrent en fonction pour aider à gérer les phases hors vol, décollage ou pour assurer la conservation de l'aile à proximité du pilote en cas de lâché de la barre de contrôle ou comme assistance au contrôle de l'assiette.

Ces systèmes compliquent considérablement la gestion de l'aile que ce soit en vol ou au sol, d'autre part la gestion d'un nombre élevé de lignes constitue une source d'erreurs non négligeable et potentiellement dangereuse.

La forme en plan des ailes autoporteuses classiques implique que les suspentes porteuses et les suspentes de contrôles ne soient pas éloignées de la position de la résultante des forces aérodynamiques. De ce fait la forme en plan de ces ailes présente une courbure régulière du bord d'attaque et du bord de fuite vers un point d'équilibre situé légèrement en arrière des porteuses et en avant des lignes de direction.

Cette forme d'aile n'étant stable que s'il existe une portance suffisante propre à maintenir l'aile en vol, il convient de placer les points d'ancrage des porteuses relativement proches de l'axe d'équilibre induisant ainsi une limite à la capacité de choquer au delà d'une incidence minimum après laquelle l'aile ne pourrait plus assurer sa portance et tomberait en piqué au sol sans que le pilote puisse en assurer le contrôle.

Cette incidence minimum est potentiellement dangereuse en cas de survente car la force ainsi générée peut entraîner une perte de contrôle du pilote.

D'autre part lorsque l'aile est en position choquée la disposition aux extrémités de l'aile des suspentes porteuses induit une diminution de l'envergure et une réduction de l'angle d'incidence du dernier tiers de l'aile annulant de fait son rôle directionnel.

La reprise de contrôle de la direction implique une reprise d'incidence de l'ensemble de l'aile ce qui est potentiellement dangereux en cas de survente.

Les multiples systèmes de lignes actuellement proposés n'offrent pas une réponse adaptée à ces problèmes, la présente invention a donc pour but de remédier à cette carence.

Le but de la présente invention est ainsi de proposer une aile qui présente des caractéristiques permettant de porter le point d'équilibre choqué bien au-delà des normes actuelles, d'interdire à l'aile de pouvoir tomber en piqué vers le sol, d'empêcher l'aile de rester bloquée sur son bord d'attaque en cas de chute sur l'eau, et également de limiter le nombre de lignes.

L'invention a pour objet de combiner une géométrie particulière et inédite de l'aile avec un système de suspentes adapté afin de gérer parfaitement le degré de portance et de contrôle de l'aile sur l'ensemble de sa plage d'utilisation et d'en simplifier la mise en oeuvre dans les phases de vols transitoires (décollage ou neutralisation totale de la traction).

L'aile de traction gonflable selon l'invention est conformée en dièdre négatif, à savoir du type dit "C-shape" ou "C-kite", et comprend des suspentes porteuses et des suspentes servant à la gestion de la direction et de l'assiette.

Cette aile se caractérise essentiellement en ce qu'elle est configurée pour présenter en vol une forme de delta, et à cet effet son bord d'attaque présente, à plat, une courbure telle que, pour chaque demie-aile, l'angle formé par la tangente audit point central avec la tangente en un point donné lorsque ledit point donné se déplace du point central avant vers l'extrémité de l'aile dans le premier tiers de ladite demie-aile, ledit angle est supérieur à 15°.

Selon une autre caractéristique, dans le premier tiers de ladite demie-aile à partir du point central avant et en allant vers une extrémité, ledit angle va croissant.

La forme en delta de l'aile telle que définie précédemment, donne à l'aile une plus grande stabilité qui autorise la modification de l'implantation des suspentes, en sorte de conserver l'envergure en vol, et de ne pas diminuer celle-ci lors du choqué.

Ainsi, selon une caractéristique additionnelle de l'aile de traction selon l'invention, elle comporte d'une part une suspente porteuse ramifiée, dont les ramifications sont implantées dans une partie médiane de l'aile qui représente entre sept et huit dixièmes de l'ensemble de l'aile; et d'autre part deux suspentes de contrôles, qui lui sont chacune solidarisées extérieurement à ladite partie médiane.

Cette implantation permet, outre la conservation de l'envergure envol, une légère augmentation de l'incidence différentielle des ailerons, c'est-à-dire des parties de l'aile tangentes aux lignes de contrôle, et d'augmenter leur traînée ce qui a pour effet de stabiliser l'aile sur son axe de lacet.

Selon une autre caractéristique additionnelle de l'aile de traction selon l'invention, la suspente porteuse est ramifiée en deux suspentes secondaires, chacune ramifiée à deux suspentes hautes chacune rattachée à la même demie-aile, dont l'une en bordure extérieure de la partie médiane.

Selon une autre caractéristique additionnelle de l'aile de traction selon l'invention, la ou les ramifications sont réalisées chacune au travers d'une poulie.

On notera également que, de manière avantageuse, la sécurité de l'utilisateur est assurée par un dispositif de largage permettant de supprimer la puissance de l'aile en cas d'urgence, en rompant la liaison entre le harnais et la barre, tout en conservant cependant un lien entre l'aile et le harnais, du type généralement appelé cinquième ligne, pour ne pas risquer de perdre cette dernière.

Avec l'aile selon l'invention, il est possible d'obtenir le même effet "cinquième ligne" sans avoir recours à une cinquième ligne. Ainsi, à cet effet, la porteuse se ramifie en deux liens tous les deux solidarisables au harnais, dont l'un est lié audit harnais et est largable.

Après avoir lâché la barre de commande, le manoeuvrement en traction d'une poignée permet d'ouvrir instantanément le lien qui réuni le harnais au lien lié à la porteuse et à la barre, en sorte que cette dernière se déplacement librement vers le haut, autorisant ainsi à l'aile un mouvement de bascule complet sur le dos, annulant ainsi complètement sa puissance, la porteuse, et donc l'aile, demeurant liée au harnais au travers de l'autre lien.

Les avantages et les caractéristiques de l'aile de traction selon l'invention, ressortiront plus clairement de la description qui suit et qui se rapporte au dessin annexé, lequel en représente un mode de réalisation non limitatif.

### Dans le dessin annexé :

- la figure 1 représente une vue schématique à plat d'une aile selon l'invention ;
- la figure la est une vue similaire à la figure 1 représentant une aile selon l'invention comparée à une aile de l'état de la technique ;
- la figure 2 représente une vue schématique à plat de la même aile et son système de gestion de la puissance de traction, de la direction et des manoeuvres transitoires ;
- la figure 3a représente une vue schématique de profil de la même aile en vol en position bordée ;
- la figure 3b représente une vue schématique de profil de la même aile en vol en position choquée ;
- la figure 4a représente une vue schématique de face de la même aile en vol en position bordée ;
- la figure 4b représente une vue schématique de face de la même aile en vol en position choquée ;
- la figure 5 représente une vue schématique en élévation de profil de la même aile lors de son utilisation.

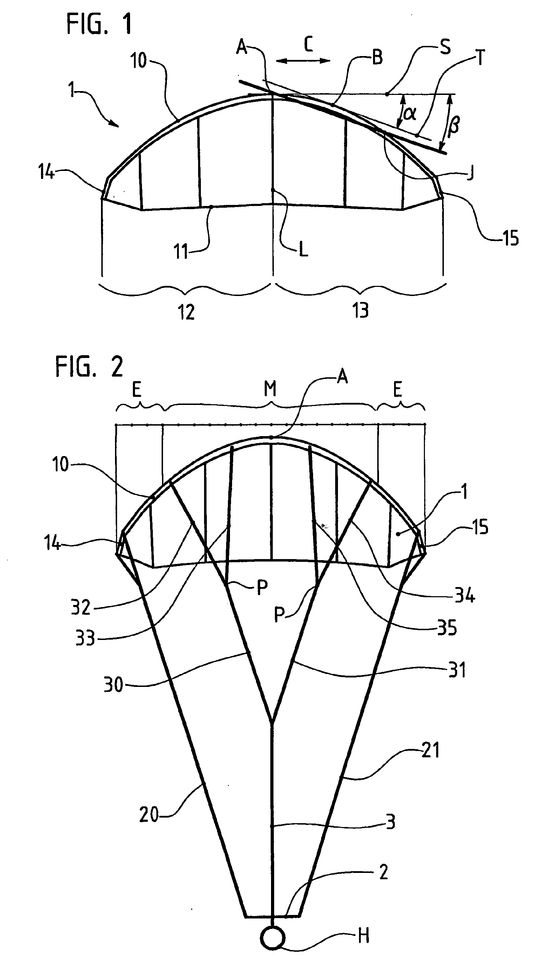

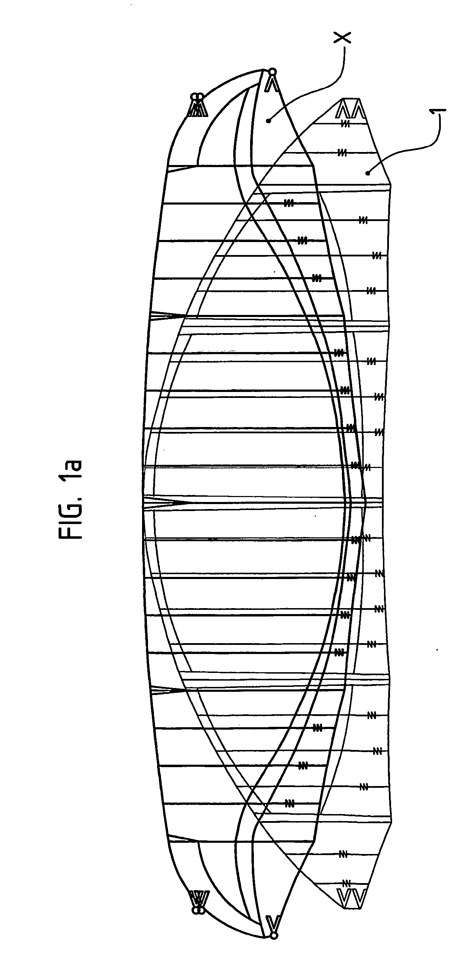

Sur la figure 1, on peut voir une aile 1, qui comprend un bord d'attaque 10, un bord de fuite 11, un point central avant A par lequel passe une ligne L séparant l'aile 1 en deux demies-ailes 12 et 13, comprenant chacune une extrémité, respectivement 14 et 15.

Selon l'invention le bord d'attaque présente une courbure telle que pour chaque demie-aile 12 ou 13, l'angle α formé par la tangente S point central avant A avec la tangente T en un point donné B va croissant lorsque ce point donné se déplace du point central avant A vers l'extrémité 14 ou 15 de l'aile 1. En particulier, cette tangente T au point B qui est situé dans le premier tiers C de chaque demie-aile 12,13, à partir du point central A, fait avec la tangente S un angle α supérieur à 15°, en l'occurrence et de préférence 21°.

On notera que lorsqu'il est fait référence à la courbure du bord d'attaque, il s'agit de la courbure moyenne de ce dernier, sachant que les ailes de ce type sont dans la majorité des cas constituées d'un assemblage d'éléments, assemblage qui peut conférer à la courbure un profil de ligne brisée.

L'inclinaison du bord d'attaque 10 par rapport à la tangente au point central A confère donc une courbure prononcée à l'aile 1. La figure la montre clairement la différence entre la forme d'une aile X de l'état de la technique et l'aile 1 selon l'invention.

De manière générale, la courbure, définie par l'angle α, dépend de la taille de chaque aile 1. Ladite courbure dépend donc du rapport entre l'envergure de l'aile et ledit angle α.

De plus, cette courbure du bord d'attaque 10 se veut continue selon les modes de réalisation visibles sur les figures. Toutefois, d'autres modes de réalisation, non représentés, englobent des courbures présentant des écarts et bosses, ayant notamment pour rôle de faciliter le redressement de la voile en phase de (re)décollage. Pour autant, l'invention concerne la courbure dans son ensemble, sans prendre en compte les ajouts ou modifications ponctuels de l'angle α.

D'autre part, comme visible sur la figure 1, on notera que l'angle β, entre la tangente S au point centrale A et la droite passant par ledit point A et un point J situé à la moitié de chaque demie-aile 12,13, est supérieur à 10°, de préférence supérieur à 15°.

Sur la figure 2, on retrouve la même aile 1, présentant les mêmes caractéristiques de forme, et à laquelle sont solidarisés des organes de suspensions qui consistent en des suspentes.

Ces suspentes comprennent notamment deux lignes de contrôle 20 et 21 qui relient chacune une extrémité, respectivement 14 et 15, à une barre de commande 2, et qui servent à la gestion de la direction et de l'assiette.

Les organes de suspension comprennent également une ligne porteuse 3 reliée au pilote H et se ramifiant en deux suspentes secondaires 30 et 31, chacune se ramifiant, par l'intermédiaire d'une poulie P, en deux suspentes hautes, respectivement 32 et 33, 34 et 35. Les suspentes hautes 32 et 33 sont solidarisées à la demie-aile 12, tandis que les suspentes hautes 34 et 35 sont solidarisées à la demie-aile 13.

L'aile 1 comprend une partie médiane M, constituée en l'occurrence de la réunion de 7/10èmes de chacune des demies-ailes 12 et 13, et extérieurement à la partie médiane M, deux parties extrêmes E, aussi appelées ailerons, constituées chacune de 3/10èmes d'une demie-aile 12, 13.

On notera que dans l'exemple représenté la zone médiane M est constituée des 7/10èmes de l'aile 1, mais qu'elle pourrait être étendue jusqu'à être constituée des 8/10èmes de l'aile 1, et en sorte que chacune des parties extrêmes E soit constituée de 1/10ème de l'aile 1.

Les suspentes hautes 32, 33 et 34, 35 sont implantées dans la partie médiane M, au niveau du bord d'attaque 10, en l'occurrence les suspentes hautes 32 et 34 sont implantées en bordure de la partie médiane M, tandis que les suspentes hautes 33 et 35 sont implantées plus centralement.

Chacune des lignes de contrôle 20 et 21 est implantée dans une partie E, et comme on peut le voir sur la figure 2, elles peuvent être ramifiées.

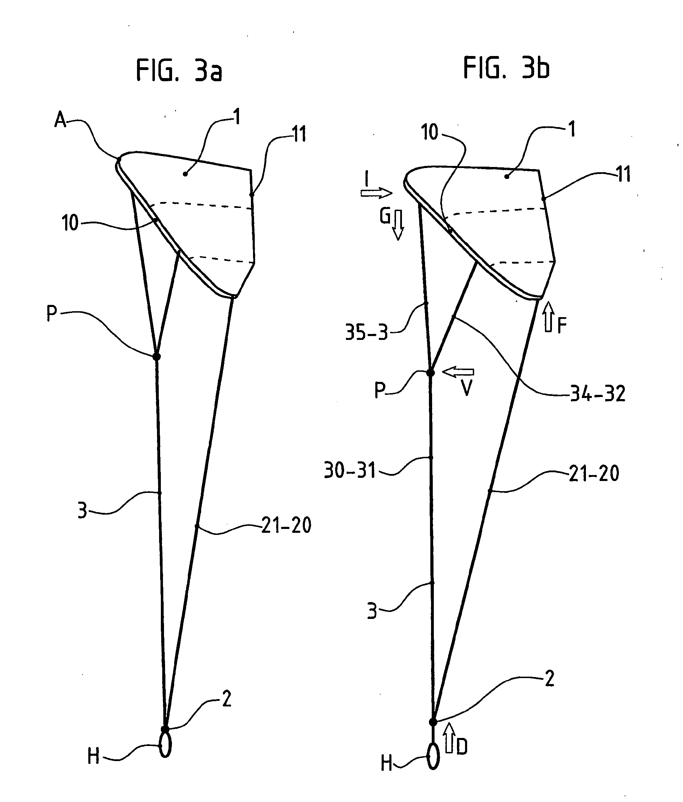

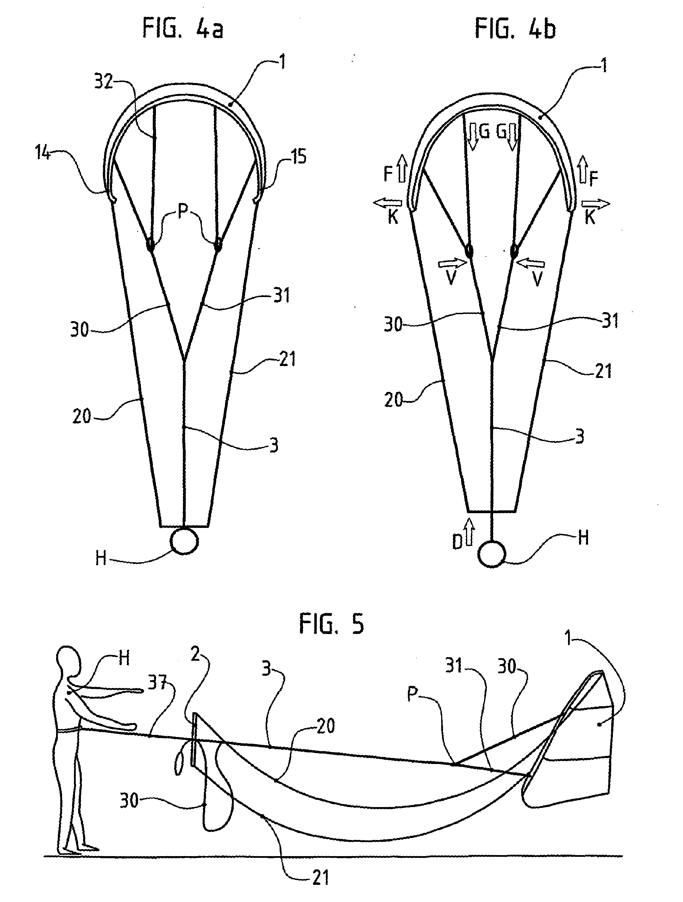

L'implantation particulière des suspentes présente de nombreux avantages qui vont être présentés à la lumière de la description des figures 3a, 3b, 4a et 4b.

Sur les figures 3a et 3b, où l'aile 1 est montrée de profil en vol, on peut constater que la courbure particulière de son bord d'attaque 10, et exposé dans la description de la figure 1, lui donne approximativement la forme d'une aile delta, ce qui confère à cette aile une plus grande stabilité sur son axe longitudinal, par rapport aux ailes actuellement connues.

On notera que la forme en delta de l'aile présente un autre avantage, en effet lorsque l'aile 1 est tombée à l'eau ou au sol sur son bord d'attaque 10, cette forme delta l'empêche de se stabiliser dans cette position en la faisant basculer naturellement sur un coté qui est la position naturelle de décollage permettant ainsi au pilote une reprise rapide du contrôle de son aile.

Les figures 3a et 4a, montrent l'aile 1 en position bordée, tandis que les figures 3b et 4b montrent la même aile 1 en position choquée.

La forme en delta de l'aile 1 augmente sa stabilité, ce qui offre la possibilité d'étendre la zone d'implantation M des suspentes porteuses hautes 32, 33, 34, 35, en sorte de ne pas réduire l'envergure en vol lors du choqué, et même de l'augmenter par un transfert de charge.

En effet, comme on peut le voir sur les figures 3b et 4b, la remontée D de la barre de commande 2 le long de la ligne porteuse 3, induit un changement d'incidence de l'aile 1, par une élévation F des ailerons E, et un abaissement G du bord d'attaque 10. La diminution de portance entraîne une augmentation de traînée relative qui a pour double effet de faire reculer légèrement l'aile 1 par rapport au pilote H, dans un déplacement I, et de transférer le point d'application des forces vers l'avant et le centre de l'aile 1 par déplacement V des poulies P sur les suspentes hautes 32, 33, 34 et 35.

On notera qu'un tel transfert s'opère également même s'il n'y a pas de poulies P, mais en générant alors une force tendant à réduire l'envergure en vol de l'aile, ce qui tend à amortir les effets du système. Une telle configuration peut présenter un certain intérêt pour des ailes à surface réduite, afin d'en diminuer la vivacité.
Par ailleurs,

La remontée D de la barre de commande 2 le long de la ligne porteuse 3 induit une légère augmentation K, de l'envergure au niveau des extrémités 14 et 15 de l'aile 1, ainsi qu'une légère augmentation d'incidence participant à un basculement franc de l'aile 1 sur son axe de tangage.

Les caractéristiques de l'aile 1 selon l'invention présente d'autres avantages que ceux concernant le maniement en vol, et notamment du point de vue sécurité. En effet, ces caractéristiques autorisent une conception différente des systèmes actuellement connus sous le nom de "cinquième ligne".

Ainsi, en référence maintenant à la figure 5, on peut voir que la porteuse est ramifiée en deux lignes 36 et 37, toutes deux fixées au harnais du pilote H, la ligne principale 36 étant toutefois largable.

En pratique, après avoir lâché la barre 2 et largué la ligne principale 36, la barre 2 coulisse librement vers le haut ce qui provoque un mouvement de bascule de l'aile 1, annulant ainsi complètement sa puissance. La poulie P sur laquelle est connectée la porteuse 3, se déplace vers l'aile 1, stabilisant ainsi cette dernière sur les lignes hautes 32, 33, 34, 35, ce qui permet un amerrissage en douceur, ne générant aucune traction susceptible de nuire au pilote P, lequel demeure relié à l'aile 1 par la ligne 37.

Grâce à sa forme spécifique en delta, ainsi que son système adapté de gestion de la puissance de traction, de la direction et des manoeuvres transitoires, l'aile 1 selon l'invention améliore donc grandement les qualités de vole et la maniabilité d'une telle voile.

## Revendications

1. Aile de traction gonflable et son système de gestion de la puissance de traction, de la direction et des manoeuvres transitoires, conformée en dièdre négatif, du type dit "C-shape" ou " C-kite", et comprenant des suspentes porteuses et des suspentes servant à la gestion de la direction et de l'assiette, l'aile (1) est configurée pour présenter en vol une forme de delta, et à cet effet son bord d'attaque (10) présente, à plat, une courbure telle que, pour chaque demie-aile (12,13), l'angle (α) formé par la tangente (S) audit point central (A) avec la tangente (T) en un point donné (B) va croissant lorsque ledit point donné (B) se déplace du point central (A) avant vers l'extrémité (14,15) de l'aile (1) ; l'aile est **caracterisée en ce que**, dans le premier tiers de ladite demie-aile (12,13) à partir du point central avant (A) et en allant vers une extrémité (14,15), ledit angle (α) est supérieur à 15°.

2. Aile (1) de traction selon la revendication 1, **caractérisée en ce que** le bord d'attaque (10) présente une courbure telle que, pour chaque demie-aile (12,13), l'angle (β) entre la tangente (S) au point central (A) et la droite reliant ce dernier au point (J) situé à la moitié de chaque demie-aile (12,13), est supérieur à 15°.

3. Aile (1) de traction selon la revendication 1 ou la revendication 2, **caractérisée en ce qu'**elle comporte d'une part une suspente porteuse (3) ramifiée et implantée dans une partie médiane (M) de l'aile (1) qui représente entre sept et huit dixièmes l'ensemble de l'aile (1); et d'autre part deux suspentes de contrôles (20, 21), qui lui sont chacune solidarisées extérieurement à ladite partie médiane (M).

4. Aile (1) de traction selon l'une quelconque des revendications précédentes, **caractérisée par le fait que** la suspente porteuse (3) est ramifiée en deux suspentes secondaires (30, 31), chacune ramifiée, à deux suspentes hautes (32, 33, 34, 35) rattachées chacune à la même demie-aile (12,13), dont l'une en bordure extérieure de la partie médiane (M).

5. Aile (1) de traction selon la revendication 4, **caractérisée en ce que** la ou les ramifications sont réalisées chacune au travers d'une poulie (P).

## Claims

1. Inflatable traction kite and its system for managing the traction power, the direction and the transition maneuvers, having a negative dihedral shape, such as "C-shape" or " C-kite", further comprising bearing rigging lines and rigging lines used for managing the direction and the trim, which kite (1) is configured so as to have a delta shape during the flight, and for that purpose its leading edge (10) has, when laid flat, a curvature such that, for each half wing (12, 13) of said kite, the angle (α) formed by the tangent (S) to said central point (A) with the tangent (T) at a given point (B) is increasing when said given point (B) moves from the forward central point (A) to the end (14, 15) of the kite (1) ; said kite is **characterised in that**, in the first third of said half wing (12, 13) of the kite, from the forward central point (A) to an end (14, 15), said angle (α) is larger than 15°.

2. Traction kite (1) according to claim 1, wherein the leading edge (10) has a curvature such that, for each half wing (12, 13) of the kite, the angle (β) between the tangent (S) to the central point (A) and the straight line connecting the latter to the point (J) located at the half of each half wing (12, 13) of the kite, is larger than 15°.

3. Traction kite (1) according to claim 1 or claim 2, wherein it includes a ramified bearing rigging line (3) arranged in a median portion (M) of the kite (1) that represents between seven and eight tenths of the entire kite (1); and two control rigging lines (20, 21) that are each made integral with it externally to said median portion (M).

4. Traction kite (1) according to any of the preceding claims, wherein the bearing rigging line (3) is ramified into two secondary rigging lines (30, 31), each ramified into two upper rigging lines (32, 33, 34, 35) each connected to the same half wing (12, 13) of the kite, one of which at the outer edge of the median portion (M).

5. Traction kite (1) according to claim 4, wherein the ramification or ramifications are each made through a pulley (P).

## Patentansprüche

1. Aufblasbarer Zugflügel und sein System zum Steuern der Zugkraft, der Richtung und der transitorischen Manöver, mit einer negativen Diederform, der als "C-shape" oder " C-Kite" bezeichneten Art, und umfassend zur Steuerung der Richtung und des Trimms verwendete Tragleinen und Fangleinen, welcher Flügel (1) **dadurch gekennzeichnet ist, dass** er so konfiguriert ist, dass er während dem Flug eine Deltaform aufweist, und zu diesem Zweck weist seine Vorderkante (10), wenn er flach liegt, eine solche Krümmung auf, dass für jeden Halbflügel (12, 13), der Winkel (α) zwischen der Tangente (S) an den Mittelpunkt (A) bezüglich der Tangente (T) an einen gegebenen Punkt (B) steigt, wenn sich der besagte gegebene Punkt (B) von dem vorderen Mittelpunkt (A) zum Ende (14, 15) des Flügels (1) hin verschiebt ; wobei der Flügel **dadurch gekennzeichnet ist, dass** der besagte Winkel (α) im ersten Drittel des besagten Halbflügels (12, 13), vom besagten vorderen Mittelpunkt (A) zu einem Ende (14, 15), größer als 15° ist.

2. Zugflügel (1) nach Anspruch 1, **dadurch gekennzeichnet, dass** die Vorderkante (10) eine solche Krümmung aufweist, dass für jeden Halbflügel (12, 13) der Winkel (β) zwischen der Tangente (S) an den Mittelpunkt (A) und der Geraden, die diesen letzteren mit dem Punkt (J) verbindet, der sich an der Hälfte jedes Halbflügels (12, 13) befindet, größer als 15° ist.

3. Zugflügel (1) nach Anspruch 1 oder Anspruch 2, **dadurch gekennzeichnet, dass** er einerseits eine verzweigte Tragleine (3) umfasst, die in einem Mittelteil (M) des Flügels (1), der sieben bis acht Zehntel des gesamten Flügels (1) darstellt, angeordnet ist; und andererseits zwei Steuerfangleinen (20, 21), die ihm jeweils mit demselben außerhalb des besagten Mittelteils (M) fest verbunden sind.

4. Zugflügel (1) nach irgendeinem der vorgehenden Ansprüche, **dadurch gekennzeichnet, dass** die Tragleine (3) in zwei sekundäre Fangleinen (30, 31) verzweigt ist, die jeweils in zwei obere Fangleinen (32, 33, 34, 35) verzweigt sind, die jeweils an demselben Halbflügel (12, 13) angeschlossen sind, wovon eine am Außenrand des Mittelteils(M).

5. Zugflügel (1) nach Anspruch 4, **dadurch gekennzeichnet, dass** die Verzweigung oder Verzweigungen jeweils durch eine Riemenscheibe (P) erfolgen.
